# EUROPEAN PATENT APPLICATION

(11) **EP 4 151 348 A1**
(43) Date of publication of application: **22.03.2023**
(21) Application number: 21020464.0
(22) Date of filing: 16.09.2021
(51) Int. Cl.: B23K 9/028, B23K 9/32, B23K 37/00, B23K 9/035

(54) **MODULAR PURGING**

(71) Applicant: Linde GmbH, 82049 Pullach (DE)
(72) Inventor: Siewert, Erwan, 82049 Pullach (DE); Pfreuntner, Michael, 82049 Pullach (DE)
(74) Representative: Lu, Jing

(57) **Abstract**

The present invention relates to a purging apparatus (1) for purging a root (2a) of a weld seam (2) formed along a surface region (3a) of a workpiece (3) upon welding, the purging apparatus (1) comprising an elongated rail (10) forming a groove (11) for guiding a purging gas (G), the rail (10) being formed by a plurality of segments (100, 101) connected to one another so that the rail (10) can be adapted to a curvature of said surface region (3a) of the at least one workpiece (3), the groove (11) being delimited by a face side (10a) of the rail (10), the face side (10a) configured to contact said surface region (3a) of the at least one workpiece (3) to form a channel through which the purging gas (G) can be passed to purge the root (2a) of the weld seam (2) upon welding the weld seam (2).

## Description

The present invention relates to a purging apparatus and to a corresponding method.

Oxidation of the underside of a weld seam, i.e. of the root of the weld seam often occurs during welding. To prevent this oxidation a purging gas is used (also called root gas) to cover the root of the weld seam and prevent oxidation. Particularly, in case of longitudinal weld seams the underside of the seam is usually pressed onto a rail that comprises a groove through which said gas is passed so that the gas covers the root of the weld seam.

In this way, atmospheric gas at the root is displaced so that oxidation of the root of the weld seam can be reliably avoided. The purging gases used are typically argon, nitrogen and gas mixtures with hydrogen.

However, the use of the afore-mentioned rails is not possible for curved components (e.g. pipes) or for components with a complex geometry. For this reason, in case of such curved workpieces the entire interior is usually flooded with the purging gas or a displacement body is used and continuously flushed. Complete purging of the interior has the disadvantage that the purging times and the gas requirement are large. If displacement bodies are used, they must be adapted for each individual geometry of the component to be welded.

Alternatively, large-volume components are brushed or pickled after welding in order to eliminate the tarnish.

Thus, purging methods in case of more complex geometries usually require a more involved purging procedure and is thus less efficient, often bears the risk of dead spaces and complex safety aspects. Particularly, displacement bodies can only be used up to a certain diameter due to the fact that they are unprofitable for a large diameter. In case of heat sources forming a keyhole, destruction of the displacement would occur and keyhole welding is not possible. Furthermore, displacement bodies often also cause accessibility problems.

Based on the above, the problem to be solved by the present invention is to provide a purging apparatus and a corresponding method that are improved regarding the above-stated disadvantages.

This problem is solved by a purging apparatus having the features of claim 1 as well as by a method having the features of claim 9.

Preferred embodiments of these aspects of the present invention are stated in the corresponding sub claims and are described below.

According to claim 1, a purging apparatus for purging a root of a weld seam formed along a surface region of a workpiece upon welding is disclosed, the purging apparatus comprising an elongated rail forming a groove for guiding a purging gas, the rail being formed by a plurality of segments pivotably connected to one another so that the rail can be adapted to a curvature of said surface region of the at least one workpiece, the groove being delimited by a face side of the rail, the face side configured to contact said surface region of the at least one workpiece to form a channel through which the purging gas can be passed to purge the root of the weld seam upon welding the weld seam.

According to an embodiment of the present invention, the purging apparatus comprises a holding device for pressing the rail with the face side against said surface region. Particularly, in an embodiment, the holding device comprises an arm, particularly a cantilever for pressing the adaptable rail against said surface region.

Further, in an embodiment, the rail is configured to guide a cooling liquid to cool the rail.

Furthermore, according to an embodiment, the rail comprises cooling gas nozzles to cool the workpiece by discharging a cooling gas onto the workpiece through the cooling gas nozzles.

Further, in an embodiment, the rail comprises a conduit for receiving a cooling liquid to cool the rail upon welding.

Furthermore, according to an embodiment, one of the segments comprises a through-hole connecting the groove to a bottom side of the segment to allow passage of a plasma jet through the through-hole of the segment upon welding said weld seam using [keyhole technique] plasma welding. Preferably, in an embodiment, said segment is formed out of a metal, particularly copper.

Further, according to an embodiment, the respective segment comprises at least one end surface via which the segment is rigidly connected to a neighbouring segment, wherein an angle of the respective end surface is selected so as to adapt the rail to the curvature of said surface region.

According to yet another embodiment, the purging apparatus comprises a metallic mesh or a perforated plate covering the groove at the face side of the rail.

Yet a further aspect of the present invention relates to a method for purging a root of a weld seam formed along a surface region of a workpiece using a purging apparatus according to one of the preceding claims, the method comprising the steps of:
- arranging the rail along said surface region, and
- allowing a purging gas to flow through the groove along the root of the weld seam upon welding of the weld seam.

According to an embodiment of the method, the weld seam is welded using a plasma arc, wherein a plasma jet generated upon welding is allowed to pass through said through-hole of said segment of the rail, and wherein purging gas is passed through the groove along the root of an already welded portion of the weld seam.

Furthermore, in an embodiment of the method, for welding the weld seam, the work piece is moved relative to the rail and a welding torch, the welding torch and the rail being stationary with respect to one another.

Further, according to an embodiment of the method, upon welding the weld seam the workpiece is stationary and the rail and a welding torch are moved relative to the workpiece synchronously with respect to one another.

In the following embodiments of the present invention as well as further features and advantages shall be described with reference to the Figures, wherein
- Fig. 1: shows an embodiment to a purging apparatus according to the present invention;
- Fig. 2A: shows a cross section along the plane II-II of Fig. 1;
- Fig. 2B: shows a further cross section along the plane II-II of Fig. 1, wherein here the purging apparatus is used being spaced apart from the surface of the workpiece,
- Fig. 2C: shows a further cross section along the plane II-II of Fig. 1, wherein here the purging apparatus comprises a metallic mesh or perforated plate covering the groove at the face side of the rail, and
- Fig. 3: shows an embodiment of the purging apparatus that can be used when plasma welding using a keyhole technique.

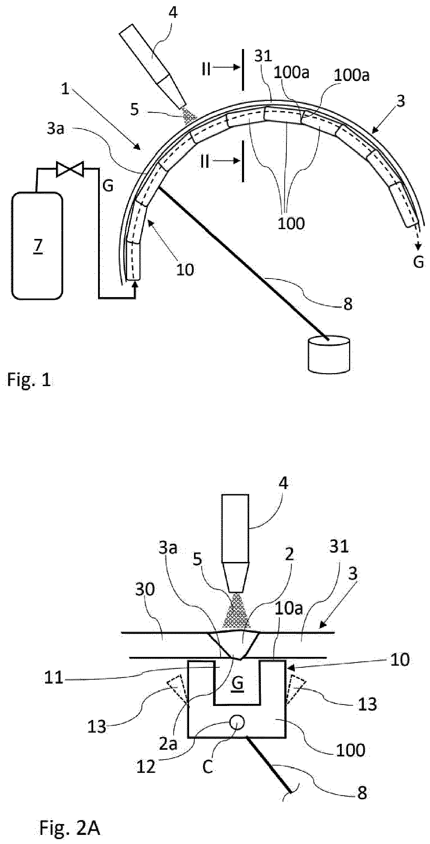

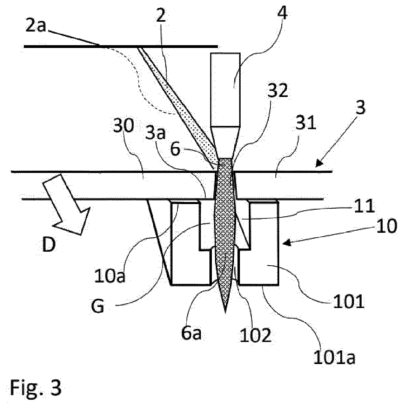

Fig. 1 shows in conjunction with Fig. 2A an embodiment of a purging apparatus 1 according to the present invention for purging a root 2a of a weld seam 2 formed along a surface region 3a of a workpiece 3 upon welding. Particularly, the weld seam 2 can be welded using a welding torch 4 generating an arc 5 (or a plasma jet 6, cf. Fig. 3). Particularly, all suitable welding techniques can be used. Here, particularly, the workpiece 3 comprises two parts 30, 31 that are connected by the weld seam 2. The purging apparatus 1 comprises an elongated rail 10 forming a groove 11 for guiding a purging gas G, the rail 10 being formed by a plurality of segments 100, 101 connected to one another, for example by hinges, so that the rail 10 can be adapted to a curvature of said surface region 3a of the at least one workpiece 3 by adjusting the angles between each two neighbouring segments 100 accordingly. Furthermore, instead of using hinges, the segments 100 of the rail 10 can also be rigidly connected to one another via their end surfaces 100a, wherein segments 100 can have at least one angled end surface 100a to adjust the curvature of the rail 10 to the curvature of the workpiece 3. Particularly, an angle of the respective end surface is chosen to fit to the pipe / workpiece diameter.

Further, the groove 11 of the adaptable rail 10 being formed by the interconnected segments 100 is delimited by a face side 10a of the rail 10, which face side 10a is configured to be pressed against said surface region 3a of the workpiece 3 to form the groove 11 into a channel through which the purging gas G can be passed along the root 2a to purge the root 2a of the weld seam 2 upon welding the weld seam 2.

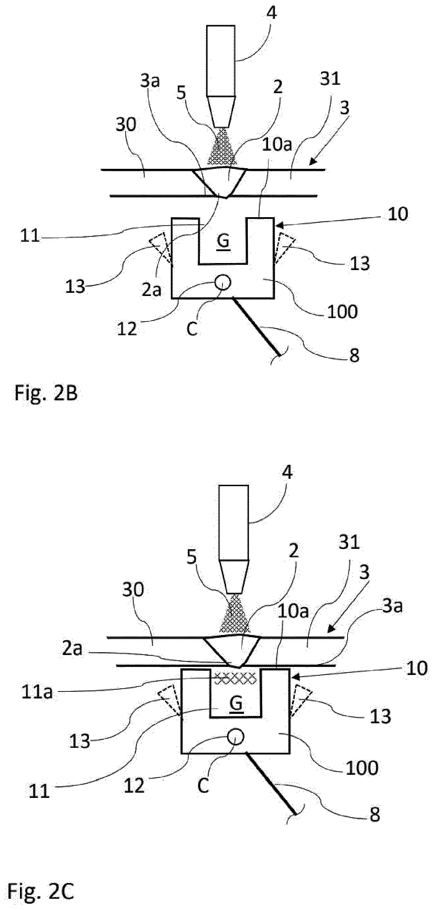

A metallic mesh 11a or perforated plate 11a can be used to close the groove 11 at the face side 10a of the rail 10 as shown in Fig. 2C. Further, instead of purging the gas from one end to the other, the gas can also be distributed to every single or second segment 100 of the rail 10 individually and distributed locally by e.g., a gas silencer. In this case the purging apparatus 1 can also be operated without contact to the workpiece 3 as shown in Fig. 2B.

Advantageously, the rail 10 being formed from multiple segments 100 is a modular device that can be easily adapted to the workpiece 3. Particularly the workpiece 3 is a pipe, with the parts 30, 31 forming sections of the pipe. In this case, the curvature of the rail 10 can be adapted to the inner radius of the pipe 3 as shown in Fig. 1.

Furthermore, generally, the number of individual segments 100 can be selected so as to adjust the length of the rail 10 appropriately. Thus, the rail 10 is variable in length and radius. According to an embodiment, the rail 10 can be pressed directly against the underside of the component 3 by means of a holding device such as an arm (e.g. cantilever), cf. Fig. 1.

According to an embodiment, the respective segment 100 can be cooled with a cooling medium C, particularly cooling liquid, such as water so that heat can be dissipated from the component 3. Particularly, the segments 100 can form a conduit 12 for guiding the cooling medium C.

In addition, gas cooling nozzles 13 (cf. Fig. 2) can be integrated to further cool the component 3. The purging gas G can be delivered from a container 7 via a piping to the rail 10 and directed from front to back so that a high relative flow occurs along the component surface 3a. This further improves the cooling effect and prevents the deposition of evaporation.

As shown in Fig. 3, for plasma welding in the keyhole technique, one of the segments 101 of the rail 10 comprises a through-hole 102 (e.g., in the centre of the segment 101) connecting the groove 11 to the bottom side 101a of the segment, so that the plasma jet 6 of the welding torch 4 can escape from the segment 101 through this through-hole 102. Accordingly, the through-hole 102 is arranged below the tap hole 32 formed in the workpiece 3 by the plasma jet 6. Furthermore, preferably, the segment 101 is well cooled and is preferably made of a material with good thermal conductivity, such as copper. Instead of a through-hole 102 a heat absorber that is well cooled and made of a material with good thermal conductivity, such as copper can be used.

Further, sensors in the rail 10, particularly in the segment 101, can be used to optimize the cooling effect as well as the purging effect e.g., based on the O₂ content or temperature of the root 2a.

In all embodiments, the positioning of the rail 10 can be conducted based on a holding device 8 such as a static arm as shown in Fig. 1. In this case the rail 10 is located below the welding torch 4. The purging gas G is fed over the already welded seam 2. The torch and fixture are stationary, the tube moves relative to it in a direction D indicated in Fig. 3.

Alternatively, in case the welding torch 4 is moved and the workpiece 3 rests, the rail 10 is moved synchronously with the torch 4.

Advantageously, the present invention allows to perform welding tasks in complex geometries with less oxidation or no oxidation at all. Purging times are drastically reduced and deposits can be avoided. A single adaptable rail can be fitted to different geometries of the workpiece to be welded.

## Claims

1. A purging apparatus (1) for purging a root (2a) of a weld seam (2) formed along a surface region (3a) of a workpiece (3) upon welding, the purging apparatus (1) comprising an elongated rail (10) forming a groove (11) for guiding a purging gas (G), the rail (10) being formed by a plurality of segments (100, 101) connected to one another so that the rail (10) can be adapted to a curvature of said surface region (3a) of the at least one workpiece (3), the groove (11) being delimited by a face side (10a) of the rail (10), the face side (10a) configured to contact said surface region (3a) of the at least one workpiece (3) to form a channel through which the purging gas (G) can be passed to purge the root (2a) of the weld seam (2) upon welding the weld seam (2).

2. The purging apparatus according to claim 1, wherein the purging apparatus comprises a holding device (8) for pressing the rail (10) with the face side (10a) against said surface region (3a).

3. The purging apparatus according to one of the preceding claims, wherein the rail (10) comprises a conduit (12) for receiving a cooling medium (C) to cool the rail (10) [upon welding]

4. The purging apparatus according to one of the preceding claims, wherein the rail (10) comprises cooling gas nozzles (13) to cool the workpiece by discharging a cooling gas onto the workpiece (3) through the cooling gas nozzles (13).

5. The purging apparatus according to one of the preceding claims, wherein one of the segments (101) comprises a through-hole (102) connecting the groove (11) to a bottom side (101a) of the segment (101) to allow passage of a plasma jet (6) through the through-hole (102) of the segment (101) upon welding said weld seam (2) using the plasma jet (6).

6. The purging apparatus according to claim 5, wherein said segment (101) is formed out of a metal, particularly copper.

7. The purging apparatus according to one of the preceding claims, wherein the respective segment (100) comprises at least one end surface (100a) via which the segment (100) is rigidly connected to a neighbouring segment (100), wherein an angle of the respective end surface (100a) is selected so as to adapt the rail (10) to the curvature of said surface region (3a).

8. The purging apparatus according to one of the preceding claims. wherein the purging apparatus (1) comprises a metallic mesh (11a) or a perforated plate (11a) covering the groove (11) at the face side (10a) of the rail (10).

9. A method for purging a root (2a) of a weld seam (2) formed along a surface region (3a) of a workpiece (3) using a purging apparatus (1) according to one of the preceding claims, the method comprising the steps of:
- arranging the rail (10) along said surface region (3a), and
- allowing a purging gas (G) to flow through the groove (11) along the root (2a) of the weld seam (2) upon welding of the weld seam (2).

10. The method according to claim 9, wherein the weld seam (2) is welded using a plasma arc (6), wherein a generated plasma jet (6a) is allowed to pass through said through-hole (102) of said segment (101) of the rail (10), and wherein purging gas (G) is passed through the groove (11) along the root (2a) of an already welded portion of the weld seam (2).

11. The method according to claim 9 or 10, wherein for welding the weld seam (2), the workpiece (3) is moved relative to the rail (10) and a welding torch (4), the welding torch (4) and the rail (10) being stationary with respect to one another

12. The method according to claim 9 or 10, wherein upon welding the weld seam (2) the workpiece (3) is stationary and the rail (10) and a welding torch (4) are moved relative to the workpiece (3) synchronously with respect to one another.
